# EUROPÄISCHE PATENTSCHRIFT

(11) **EP 1 185 474 B1**
(45) Veröffentlichungstag und Bekanntmachung des Hinweises auf die Patenterteilung: **22.12.2004**
(21) Anmeldenummer: 00936654.3
(22) Anmeldetag: 03.05.2000
(51) Int. Cl.: B65G 47/71, A23G 7/00, A23G 3/20, A23G 3/02, B65G 47/51, A23G 3/12

(54) **VORRICHTUNG ZUM ZUFÜHREN EINES VON EINEM MASSESTRANG ABGETRENNTEN LÄNGLICHEN EINZELSTÜCKS ZU EINER BEARBEITUNGSEINRICHTUNG**
DEVICE FOR FEEDING AN INDIVIDUAL LONGITUDINAL PIECE WHICH HAS BEEN SEPARATED FROM A MATERIAL STRAND TO A PROCESSING UNIT
DISPOSITIF POUR ACHEMINER UN MORCEAU INDIVIDUEL ALLONGE, SEPARE D'UN BOUDIN DE MATIERE, A UNE UNITE DE TRAITEMENT

(30) Priorität: 05.05.1999 DE 19920600
(43) Veröffentlichungstag der Anmeldung: 13.03.2002
(73) Patentinhaber: ROBERT BOSCH GMBH, 70442 Stuttgart (DE)
(72) Erfinder: BERNARD, Daniel, F-67280 Urmatt (FR); COTTEVERTE, Patrick, F-67400 Illkirch Graffenstaden (FR)
(86) Internationale Anmeldenummer: PCT/DE2000/001368
(87) Internationale Veröffentlichungsnummer: WO 2000/068119

(56) Entgegenhaltungen:
- DE-A- 19 617 187
- DE-A- 19 920 612
- DE-C- 257 504
- US-A- 3 570 417
- US-A- 3 938 647
- US-A- 4 860 882

## Beschreibung

Die Erfindung betrifft eine Vorrichtung zum Zuführen eines von einem Massestrang abgetrennten länglichen Einzelstücks zu einer Bearbeitungseinrichtung. Es ist bereits eine Vorrichtung bekannt, die eine einzige der Bearbeitungseinrichtung zugeordnete Fördereinrichtung aufweist. Beim Betrieb mit einer vorgeschalteten, kontinuierlich arbeitenden Zuführeinrichtung muß daher eine sogenannte Flußausgleichsschleife gebildet werden, die eine bestimmte Länge eines abgetrennten Einzelstücks speichert, wenn die Fördereinrichtung das Einzelstück gerade der Bearbeitungseinrichtung zuführt. Das Bilden der Flußausgleichsschleife ist jedoch nicht bei allen Massesträngen möglich, da das Produkt dabei gelängt wird oder gar brechen kann. Bei derartig kritischen Produkten werden deshalb taktweise arbeitende Fördereinrichtungen eingesetzt, deren Leistung jedoch beschränkt ist.

Durch die DE-A-196 17 187 ist eine Vorrichtung zum Verteilen eines Produktstromes bekannt.

Aufgabe der Erfindung ist es daher, insbesondere in Bezug auf ihre Produkteigenschaften kritische Massestränge ohne Bildung von Flußausgleichsschleifen kontinuierlich verarbeiten zu können, wobei gleichzeitig eine hohe Leistung der Vorrichtung erreicht werden soll. Diese Aufgabe wird bei einer Vorrichtung mit den Merkmalen des Anspruchs l gelöst.

Weitere vorteilhafte Weiterbildungen der erfindungsgemäßen Vorrichtung zum Zuführen eines von einem Massestrang abgetrennten länglichen Einzelstücks zu einer Bearbeitungseinrichtung ergeben sich aus den Unteransprüchen. Die Verwendung eines an seiner Oberseite frei drehbare Kugeln aufweisenden Weichentisches ermöglicht eine einfache und zweckmäßige Ausbildung des Weichenelements. Durch getrennt regelbare Antriebe der beiden zusätzlichen Fördereinrichtungen können Zusatzfunktionen, wie zum Beispiel das Bilden von Lücken bei aufeinanderfolgenden Einzelstücken erfüllt werden.

Ein Ausführungsbeispiel der Erfindung ist in der Zeichnung dargestellt und wird nachfolgend näher erläutert. Es zeigen:
Figur 1 eine schematische Darstellung einer erfindungsgemäßen Vorrichtung in perspektivischer Ansicht und
Figuren 2a bis 2c den Arbeitsablauf der Vorrichtung in einer vereinfachten Draufsicht.

Die in den Figuren mit 10 bezeichnete Vorrichtung wird in der Süßwarenindustrie allgemein als Abrollmaschine bezeichnet und dient zum Formen von unterschiedlich gefüllten oder ungefüllten Massen (zum Beispiel Bubble-Gum, Kaubonbons, Karamelen) zu rotationssymmetrischen Produkten. Die Vorrichtung 10 hat eine Zuführeinrichtung in Form eines ersten Förderbandes 11 für einen zu verarbeitenden Massestrang 1. Das erste Förderband 11 weist einen ersten Antriebsmotor 12 auf, der das Förderband 11 mit konstanter Geschwindigkeit v₀ antreibt. Im Bereich des ersten Förderbandes 11 ist eine nicht näher dargestellte, weil an sich bekannte Abschneideinrichtung 13 angeordnet, die von dem kontinuierlich geförderten Massestrang l jeweils Einzelstücke 2 definierter Länge abtrennt. An das erste Förderband 11 schließt sich ein Weichentisch 15 an. Der Weichentisch 15 hat eine Oberseite 16, die derart ausgebildet ist, daß darauf bewegte Einzelstücke 2 leicht beweg- beziehungsweise verschiebbar sind. Vorzugsweise hat der Weichentisch 15 auf seiner Oberseite 16 dicht an dicht frei drehbar gelagerte Rollen oder Kugeln. Derartige Rollentische sind allgemein bekannt. An den Weichentisch 15 schließen sich zwei parallel zueinander angeordnete Fördermittel an, die als zweites Förderband 17 und als drittes Förderband 18 ausgebildet sind. Die Förderbänder 17, 18 weisen jeweils einen separaten, regelbaren Antrieb 20, 21 auf, wobei die Vorschubgeschwindigkeiten der beiden Förderbänder 17 und 18 mit v₂ und v₃ bezeichnet sind. Die Förderbänder 17, 18 weisen eine Länge auf, die mindestens der Länge der längsten zu verarbeitenden Einzelstücke 2 entspricht. Ferner schließen die Förderbänder 11, 17, 18 möglichst spaltfrei an den Weichentisch 15 an, um ein Durchhängen der Einzelstücke 2 zu vermeiden.

Die beiden Förderbänder 17, 18 sind gemeinsam mittels eines nicht dargestellten Antriebs senkrecht zur Förderrichtung 22 des ersten Förderbandes 11 in Richtung der Bewegungspfeile 23, 24 verschiebbar. Unterhalb der beiden Förderbänder 17, 18 und fluchtend mit dem ersten Förderband 11 ist eine Bearbeitungseinrichtung 15 für jeweils ein Einzelstück 2 in Form von drei sogenannten Formatzylindern 26 angeordnet. Die Länge der Formatzylinder 26 entspricht höchstens der Länge der beiden Förderbänder 17, 18. Mittels der Formatzylinder 26 wird ein abwechselnd von dem einem oder dem anderen der Förderbänder 17, 18 zugefördertes Einzelstück 2 zu kleineren rotationssymmetrischen Produkten geformt, welche anschließend von der Bearbeitungseinrichtung 25 ausgeschleust und zum Beispiel einer nachgeschalteten Einwickeleinrichtung zugeführt werden. Zum Überführen eines Einzelstücks 2 in die Bearbeitungseinrichtung 25 können zum Beispiel nicht dargestellte Querschieber dienen, die in Höhe beziehungsweise oberhalb der Förderbänder 17, 18 angeordnet sind, und die jeweils ein Einzelstück 2 von einem der Förderbänder 17, 18 zwischen die Formatzylinder 26 überschieben. Bevorzugt ist der Abstand der beiden Förderbänder 17, 18 voneinander derart gewählt, daß ein Einzelstück 2 zwischen den Förderbändern 17, 18 passieren kann.

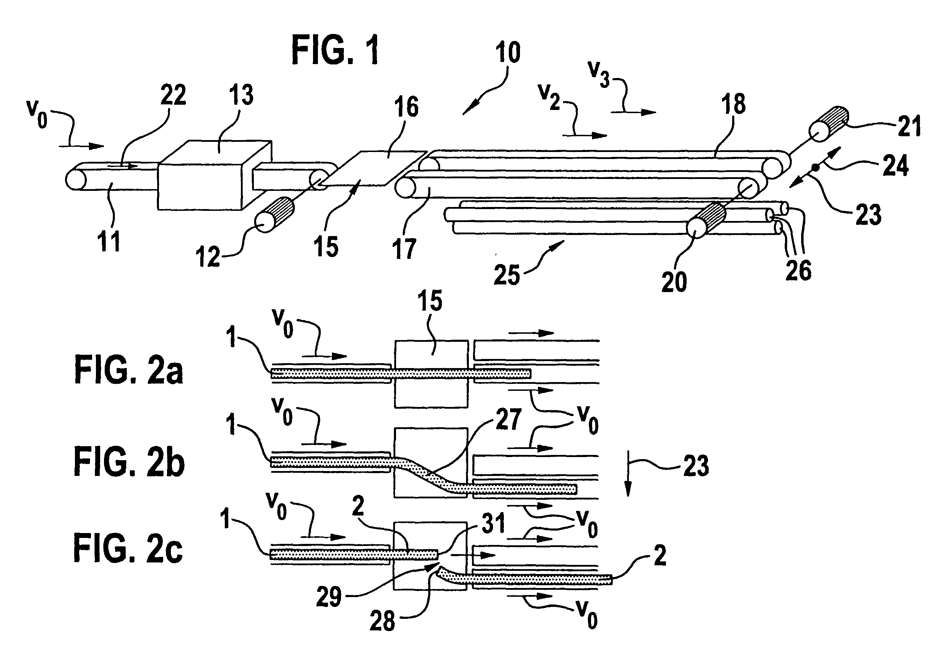

Die oben beschriebene Vorrichtung 10 arbeitet wie folgt:
Vom ersten Förderband 11 wird der Massestrang l mit der konstanten Geschwindigkeit v₀ auf den Weichentisch 15 und von dort auf das mit dem ersten Förderband 11 ausgerichtete dritte Förderband 18 gefördert, welches ebenfalls mit der Geschwindigkeit v₀ (=v₂) angetrieben wird (Figur 2a) . Anschließend wird das zweite Förderband 17 mit dem ersten Förderband 11 ausgerichtet (Verschiebung der beiden Förderbänder 17, 18 in Richtung des Bewegungspfeiles 23) und ebenfalls mit der Geschwindigkeit v₀ (=v₃) angetrieben. Dabei wird das zuvor abgetrennte Einzelstück 2 auf dem Weichentisch 15 beim Überführen auf das dritte Förderband 18 umgelenkt, so daß es einen Bogen 27 bildet (Figur 2b). Sobald das nachlaufende Ende 28 des Einzelstücks 2 auf den Weichentisch 15 gelangt, kann das dritte Förderband 18 zusätzlich beschleunigt werden, um eine Lücke 29 zum nachfolgenden Einzelstück 2 auszubilden. Sobald das vorauseilende Ende 31 des nachfolgenden Einzelstücks 2 das nachlaufende Ende 28 des vorauseilenden Einzelstücks 2 passiert hat, kann das dritte Förderband 18 bis zum Stillstand abgebremst werden, bis das zugeordnete Einzelstück 2 vollständig auf dem dritten Förderband 18 liegt und von dort der Bearbeitungseinrichtung 25 zugeführt wird (Figur 2). Während dieses Vorgangs wird das nachfolgende Einzelstück 2 vom zweiten Förderband 17 übernommen. Sobald das Einzelstück 2 vom dritten Förderband 18 ausgeschleust wurde, wird das dritte Förderband 18 wieder auf die ursprüngliche Geschwindigkeit v₀ beschleunigt und zusammen mit dem zweiten Förderband 17 in Richtung des Bewegungspfeils 24 bewegt, worauf sich die Vorgänge sinngemäß wiederholen.

## Patentansprüche

1. Vorrichtung (10) zum Zuführen eines von einem Massestrang (1) abgetrennten länglichen Einzelstücks (2) zu einer Bearbeitungseinrichtung (25), mit einer ersten, ortsfesten Fördereinrichtung (11), welche den Massestrang (1) und das Einzelstück (2) mit konstanter Geschwindigkeit (v₀) fördert, einem der ersten Fördereinrichtung (11) nachgeschalteten, ebenfalls ortsfesten Weichenelement (15) und zwei parallel zueinander angeordneten, sich an das Weichenelement (15) anschließenden zusätzlichen Fördereinrichtungen (17, 18), deren Fördergeschwindigkeiten (v₂, v₃) mittels getrennt ansteuerbarer Antriebe (20, 21) gemeinsam veränderbar sind und welche quer zur Förderrichtung (22) des Massestrangs (1) auf der ersten Fördereinrichtung (11) verfahrbar und mit der ersten Fördereinrichtung (11) ausrichtbar sind, sowie mit Mitteln zum Überführen des Einzelstücks (2) von einer der weiteren Fördereinrichtungen (17, 18) zur Bearbeitungseinrichtung (25), wobei das Weichenelement (15) eine gleitfähige Oberseite (16) zum Bilden eines Bogens des länglichen.Einzelstücks (2) beim Überführen des Einzelstücks (2) von der ersten Fördereinrichtung (11) auf eine der zusätzlichen Fördereinrichtungen (17, 18) aufweist.

2. Vorrichtung nach Anspruch 1, **dadurch gekennzeichnet, daß** die Fördereinrichtungen als Förderbänder (11, 17, 18) ausgebildet sind.

3. Vorrichtung nach Anspruch 1 oder 2, **dadurch gekennzeichnet, daß** auf der Oberseite (16) des Tisches (15) dicht an dicht frei drehbare Rollen oder Kugeln gelagert sind.

4. Vorrichtung nach einem der Ansprüche 1 bis 3, **dadurch gekennzeichnet, daß** die Bearbeitungseinrichtung (25) eine Formatzylinder (26) aufweisende Abrolleinrichtung ist, die unterhalb der weiteren Fördereinrichtungen (17, 18) angeordnet und mit diesen ausgerichtet ist.

5. Vorrichtung nach einem der Ansprüche 1 bis 4, **dadurch gekennzeichnet, daß** im Bereich der ersten Fördereinrichtung (11) eine Abtrenneinrichtung (13) für die Einzelstücke (2) angeordnet ist.

## Claims

1. Apparatus (10) for feeding an elongated individual piece (2) cut off from a mass strand (1) to a processing device (25), having a first, fixed conveying device (11) which conveys the mass strand (1) and the individual piece (2) at a constant speed (v₀), having a likewise fixed switch element (15) arranged downstream of the first conveying device (11), and having two additional conveying devices (17, 18) which are arranged parallel to one another and adjoin the switch element (15) and the conveying speeds (v₂, v₃) of which can be jointly varied by means of separately activatable drives (20, 21) and which can be moved transversely to the conveying direction (22) of the mass strand (1) on the first conveying device (11) and can be aligned with the first conveying device (11), and having means for transferring the individual piece (2) from one of the further conveying devices (17, 18) to the processing device (25), the switch element (15) having a slidable top side (16) for forming a bend of the elongated individual piece (2) during the transfer of the individual piece (2) from the first conveying device (11) onto one of the additional conveying devices (17, 18).

2. Apparatus according to Claim 1, **characterized in that** the conveying devices are designed as conveyor belts (11-, 17, 18).

3. Apparatus according to Claim 1 or 2, **characterized in that** freely rotatable rollers or balls are mounted close together on the top side (16) of the table (15).

4. Apparatus according to one of Claims 1 to 3, **characterized in that** the processing device (25) is a rolling device which has format cylinders (26) and is arranged below the further conveying devices (17, 18) and is aligned with the latter.

5. Apparatus according to one of Claims 1 to 4, **characterized in that** a cutting-off device (13) for the individual pieces (2) is arranged in the region of the first conveying device (11).

## Revendications

1. °) Dispositif (10) pour acheminer à une installation d'usinage (25) un fragment (2) allongé séparé d'un matériau en barre (1), comportant une première installation de transport (11) stationnaire qui transporte le matériau en barre (1) et le fragment (2) à une vitesse (v₀) constante, un élément d'aiguillage (15) également stationnaire situé en aval de la première installation de transport (11) et deux installations de transport (17, 18) supplémentaires, disposées parallèlement l'une à l'autre et succédant à l'élément d'aiguillage (15), dont les vitesses de transport (v₂, v₃) peuvent être modifiées conjointement à l'aide d'entraînements (20, 21) qu'on peut commander séparément, ces installations de transport pouvant être déplacées, transversalement à la direction (22) dans laquelle le matériau en barre (1) est transporté, sur la première installation de transport (11) et être alignées sur la première installation de transport (11), et comportant des moyens destinés à transmettre le fragment (2) depuis une des autres installations de transport (17, 18) jusqu'à l'installation d'usinage (25), l'élément d'aiguillage (15) présentant une face supérieure (16) glissante destinée à arquer le fragment (2) allongé lorsque le fragment (2) est transmis de la première installation de transport (11) à une des installations de transport (17, 18) supplémentaires.

2. Dispositif selon la revendication l,
**caractérisé en ce que**
les installations de transport prennent la forme de bandes transporteuses (11, 17, 18).

3. Dispositif selon la revendication 1 ou 2,
**caractérisé en ce que**
sur la face supérieure (16) de la table (15), des rouleaux ou des sphères qui tournent librement sont montés les uns tout contre les autres.

4. Dispositif selon l'une des revendications 1 à 3,
**caractérisé en ce que**
l'installation d'usinage (25) est une installation de déroulement, munie de cylindres de mise de forme (26), qui est disposée au-dessous des autres installations de transport (17, 18) et est alignée avec celles-ci.

5. Dispositif selon l'une des revendications 1 à 4,
**caractérisé en ce qu'**
une installation de séparation (13) pour les fragments (2) est disposée dans la zone de la première installation de transport (11).
